Europäisches Patentamt

European Patent Office

Office européen des brevets

(19)

(11) Numéro de publication : **0 119 580**
**B1**

(12)

# FASCICULE DE BREVET EUROPÉEN

(45) Date de publication du fascicule du brevet :
06.07.88

(21) Numéro de dépôt : **84102697.4**

(22) Date de dépôt : **13.03.84**

(51) Int. Cl.⁴ : **G 05 B 19/10**, F 24 C 7/08,
G 05 D 23/19

(54) **Système de commande pour appareil de cuisson.**

(30) Priorité : **16.03.83 FR 8304286**

(43) Date de publication de la demande :
**26.09.84 Bulletin 84/39**

(45) Mention de la délivrance du brevet :
**06.07.88 Bulletin 88/27**

(84) Etats contractants désignés :
**BE CH DE FR GB IT LI NL**

(56) Documents cités :
FR-A- 2 505 597
GB-A- 2 052 798
US-A- 4 328 408
US-A- 4 341 197
US-A- 4 369 352

(73) Titulaire : **COMPAGNIE EUROPEENNE POUR L'EQUI-
PEMENT MENAGER "CEPEM" Société anonyme dite:
12, rue de la Baume
F-75008 Paris (FR)**

(72) Inventeur : **Gelineau, Jean-Marie
6, rue de la Bascule
F-45100 Orléans (FR)**
Inventeur : **Gouardo, Didier
c/o CEPEM 63, rue du Faubourg St-Jean
F-45005 Orleans Cedex (FR)**

(74) Mandataire : **Guilguet, Philippe et al
THOMSON-CSF SCPI 19, avenue de Messine
F-75008 Paris (FR)**

## Description

La présente invention a pour objet un système de commande des sources électriques de chaleur d'un appareil de cuisson à four et/ou plaques chauffantes.

Les systèmes de commande des sources électriques de chaleur des appareils de cuisson permettent classiquement d'alimenter ces sources en énergie électrique suivant différentes options déterminées dont la sélection est laissée au choix des utilisateurs. Parmi ces options figurent classiquement des réglages en puissance suivant des pas prédéterminés et/ou des réglages en température classiquement contrôlés par thermostat. Il est connu également par le brevet US 4 328 408 de gérer, à l'aide d'un microprocesseur, plusieurs programmes de réchauffage et de cuisson en fonction d'une température finale désirée, notamment dans le cas d'un four utilisant de l'énergie micro-ondes.

Un procédé avantageux de réglage en puissance d'une source consiste à alimenter périodiquement cette source après une période de préchauffage et à jouer avec la durée périodique d'alimentation et/ou la fréquence des phases périodiques d'alimentation pour ne fournir que la puissance réellement nécessaire.

Toutefois les dispositifs actuellement mis en œuvre, d'une part, ne présentent pas toutes les garanties de sécurité utiles à préserver le matériel, dans le cas par exemple où l'utilisateur oublie de remettre un commutateur en position d'arrêt après obtention de la cuisson d'un aliment ; d'autre part, ces dispositifs sont relativement coûteux, en effet ils sont conçus de manière à être associés à une source ou à une unité de cuisson d'un appareil et leur généralisation à l'ensemble des sources d'un appareil entraîne leur multiplication. De plus chaque source de chaleur ayant généralement des caractéristiques différentes des autres, il est nécessaire de réaliser des adaptations particulières pour chacune, ce qui a généralement freiné la généralisation de tels dispositifs à l'ensemble des sources.

La présente invention a donc pour objet un système de commande des sources électriques de chaleur d'un appareil de cuisson à four et/ou plaques chauffantes suivant différentes options prédéterminées dont la sélection est laissée à l'utilisateur en vue d'une régulation en puissance et/ou en température généralisée à partir d'un appareillage standard pratiquement identique pour une large gamme d'appareils de cuisson de structures similaires permettant ainsi au constructeur et éventuellement à l'utilisateur un choix de variantes d'exploitation au prix de modifications minimes, tout en apportant une sécurité qui permet de préserver l'appareil dans le cas d'une mauvaise manipulation ou oubli de la part de l'utilisateur.

Un tel système comporte :

— une pluralité d'organes d'alimentation aptes à relier, selon diverses possibilités prédéterminées en fonction des options, les diverses sources électriques aux bornes d'alimentation en courant alternatif de l'appareil,

— une pluralité d'organes manuels de commande accessibles aux utilisateurs et aptes à fournir sélectivement diverses combinaisons de signaux sous forme numérique en correspondance avec les différentes options prédéterminées,

— une unité de gestion commune organisée autour d'un microprocesseur travaillant en temps réel sous le contrôle d'une horloge et en association, par l'intermédiaire d'une liaison bus, avec un ensemble de registres et de mémoires comprenant notamment au moins un registre d'entrée de données numériques relié aux sorties de signaux des organes manuels de commande et d'éventuels capteurs de mesure associés aux sources électriques, au moins un registre de sortie contrôlant sélectivement l'actionnement des organes d'alimentation par l'intermédiaire d'interfaces individuelles reliées à ses sorties de données numériques, ainsi qu'une mémoire morte de programmes de chauffage liés aux diverses possibilités et une mémoire vive accessible en écriture aux utilisateurs via au moins un organe manuel de commande pour l'introduction d'informations variables dans le cadre d'un programme de chauffage.

Selon l'invention, le système est caractérisé en ce que la mémoire morte comporte des données prédéterminées de temps maximal de fonctionnement de chaque source fonction de la source et du pas de réglage choisi, les données de temps maximal contenues en mémoire morte étant telles que le temps maximal se réduit en relation inverse de la puissance affichée, et en ce que la mémoire morte comporte des données prédéterminées de durée de préchauffage et de rapport cyclique de chauffage pour les différents pas de réglage des sources électriques de chaleur réglables en puissance, lesdites données relatives à un pas pour une source étant adressées par une combinaison binaire affichée par l'utilisateur au moyen de l'organe de commande en puissance autorisant ce pas pour la source considérée.

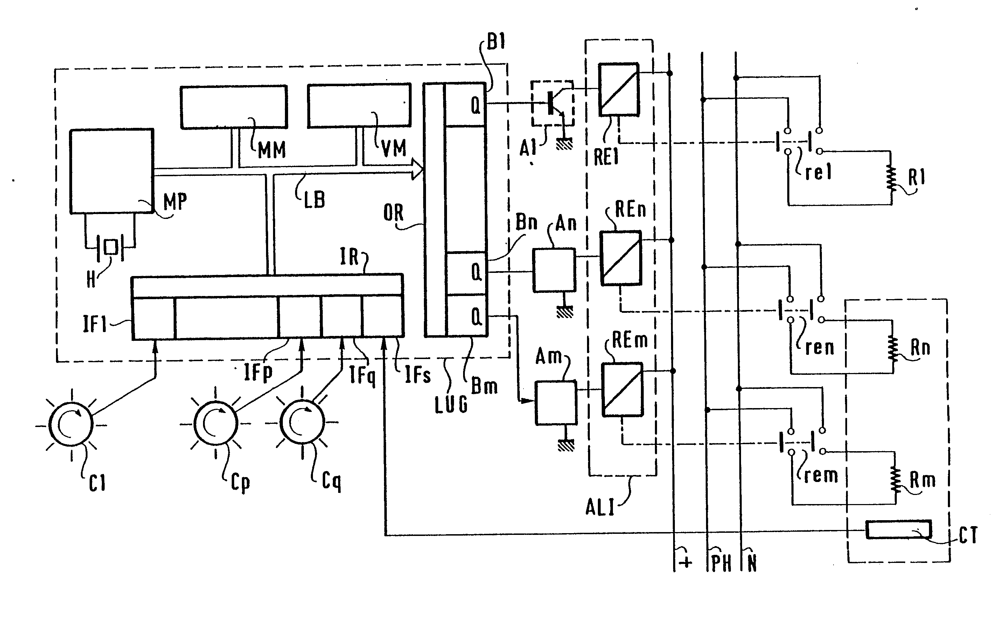

La présente invention, ses caractéristiques et ses avantages sont précisés dans la description qui suit en liaison avec la figure unique.

Cette figure unique présente le schéma de principe d'un système de commande selon l'invention.

Le système de commande présenté est destiné à un appareil de cuisson comportant une pluralité de sources électriques de chaleur représentées ici par trois résistances de chauffage R1, Rn, Rm... classiquement incluses par exemple dans des plaques en fonte, dans l'enceinte d'un four.

L'alimentation en énergie électrique de chaque résistance s'effectue par l'intermédiaire d'un ensemble d'organes d'alimentation ALI, par exemple par l'intermédiaire de contacts (re) de relais dont on a également fait figurer les bobines de commande RE ; ces contacts permettent de relier sélectivement chaque résistance à deux fils PH, N d'alimentation en courant alternatif de l'appareil de cuisson, lorsque la bobine de commande qui les contrôle est excitée.

En variante, des thyristors ou des triacs permettent aussi de constituer l'ensemble d'organes d'alimentation ALI d'une manière connue en soi.

Chaque bobine de commande RE est contrôlée par une unité de gestion UG commune et centralisée. Un élément de commutation amplificateur A associé à chaque bobine de commande RE reçoit les ordres de connexion et de déconnexion émis sous forme binaire par l'unité de gestion, et assure l'alimentation en courant continu de la bobine qu'il dessert lorsqu'un ordre de connexion est reçu. Cette alimentation est symbolisée pour la bobine de commande RE1 par la présence dans l'élément de commutation A d'un transistor NPN relié à la masse par son émetteur et à une borne de la bobine de commande RE1 par son collecteur l'autre borne de la bobine de commande étant reliée à une source de potentiel positif + classiquement obtenue par redressement et filtrage du courant alternatif alimentant l'appareil de cuisson.

L'unité de gestion UG est ici organisée autour d'un microprocesseur MP, par exemple à quatre bits, destiné à travailler en temps réel sous le contrôle d'une horloge H et en association avec un ensemble de registres et de mémoires par l'intermédiaire d'une liaison bus LB.

L'ensemble de registres et de mémoires comporte essentiellement une unité de registres d'entrée IR, une unité de registres de sortie OR, une unité de mémoire morte MM et une unité de mémoire vive VM.

L'unité de registres d'entrée IR est conçue pour recevoir les signaux émanant sous forme numérique des organes manuels de commande C1, Cp, Cq mis à disposition des utilisateurs. De manière connue certains de ces organes de commande sont habituellement associés à une source de chaleur, tel l'organe de commande C1 à la résistance R1 qui est par exemple une simple plaque chauffante. Souvent un autre organe de commande est associé à une unité de cuisson tel un four comportant plus d'une source de chaleur, telle serait par exemple la commande des résistances Rn et Rm par un organe de commande unique Cp. Un organe de commande de température est aussi parfois prévu, il est ici symbolisé par l'organe de commande Cq.

Dans une forme de réalisation, ces organes de commande sont constitués par des commutateurs rotatifs multipositions dont la manœuvre est identique aux commutateurs rotatifs usuels prévus sur les appareils de cuisson classiques. Toutefois ces commutateurs sont ici du type à courants faibles dans la mesure où ils ne commutent pas directement les résistances de chauffage des sources sur l'alimentation en puissance, mais se bornent à assurer un marquage sélectif d'entrées de l'unité de registres IR. En ce but chaque pas de réglage prévu sur un organe de commande C, c'est-à-dire chaque position de commutateur rotatif correspond à une combinaison binaire différente préférablement de quatre bits offrant donc dans l'exemple ici choisi un maximum de seize pas de réglage par commutateur. Le codage de ces combinaisons au niveau des commutateurs est classiquement réalisable sous forme de logique câblée et peut donc être analogue pour les différents commutateurs. Une interface IF associée à chaque organe de commande C assure éventuellement la nécessaire alimentation en courant continu des organes et la mise à niveau des signaux binaires à transmettre à l'unité de registres d'entrée.

L'unité de registres d'entrée IR est également conçue pour recevoir les signaux émanant de capteurs de mesure, tel le capteur de température CT présenté associé aux résistances Rn et Rm et prévu par exemple dans une enceinte de four. L'interface Ifs alors prévue entre l'unité de registres d'entrée IR et le capteur CT comporte en ce cas un convertisseur analogique-numérique non représenté permettant de convertir les signaux analogiques représentatifs des températures mesurées par le capteur CT en signaux binaires transmissibles aux registres concernés de l'unité IR.

L'unité de registres de sortie OR est conçue pour transmettre les ordres de connexion et de déconnexion à destination des bobines de commande RE et pour commander la signalisation d'informations par voie optique ou sonore à destination des utilisateurs, cette commande de signalisation ne sera pas développée plus avant ici.

Un élément de registre OR est associé à chaque bobine de commande RE ; il est classiquement constitué par une bascule de mémorisation B dont la sortie Q contrôle l'entrée de commande de l'élément de commutation A associé à la bobine de commande qu'il dessert et avec lequel elle forme une interface individuelle de contrôle d'alimentation de source de chaleur.

On mémorise en mémoire morte MM les programmes de chauffage liés aux diverses possibilités, ce qui permet diverses gammes de programme par simple changement de mémoire morte.

En particulier il est possible de généraliser le réglage de puissance des sources par connexion périodique de la source à l'alimentation en courant alternatif en phase d'utilisation.

En ce but on mémorise en mémoire morte MM les données prédéterminées par le constructeur qui prévoient les durées de préchauffage à respecter pour les différentes sources et les rapports cycliques de chauffage, c'est-à-dire de connexion et de déconnexion en fonction de la source considérée, du pas de réglage affiché par l'utilisateur et éventuellement de la coopération de cette source avec une autre pour une même unité de cuisson.

Dans le cas le plus simple d'une plaque chauffée par une résistance telle que R1, l'utilisateur sélectionne un pas de réglage donné au moyen de l'organe de commande en puissance C1 qui active sélectivement certaines entrées de l'unité de registres d'entrée IR selon une combinaison binaire correspondant à ce pas pour cet organe de commande, par exemple un codage 0011 pour le pas 4 de l'organe de commande.

Le microprocesseur MP détecte la sélection effectuée par l'utilisation au moyen de l'organe C1 et utilise la combinaison 0011 fournie par le commutateur C1 et l'adresse binaire propre à ce commutateur, telle 0001 pour C1, pour adresser la mémoire morte MM de manière qu'elle fournisse les données binaires permettant :
— d'activer la ou les bascule(s) concernée(s), soit ici la bascule B1 contrôlant la résistance R1,
— d'indiquer la durée de préchauffage et le rapport cyclique prévus pour ce pas et pour cet organe de commande.

Ces données sont classiquement analysées par le microprocesseur MP qui charge sélectivement la mémoire vive VM et l'unité de registres de sortie OR en vue d'assurer le suivi et notamment les commandes alternatives de connexion et de déconnexion au rythme prévu et sous le contrôle de l'horloge H.

On mémorise également en mémoire morte des données prédéterminées de temps maximal de fonctionnement en fonction de l'organe de commande en puissance C choisi et du pas choisi, de manière à couper l'alimentation en courant alternatif des sources en cas d'oubli, ce temps maximal étant classiquement de plusieurs heures et se réduisant par exemple en relation inverse de la puissance affichée.

De même dans le cas où le commutateur de puissance contrôle plusieurs sources associées en une unité de cuisson, les données de couplage électrique des sources sont mémorisées en mémoire morte et se traduisent physiquement par la commande simultanée d'autant de relais, avec éventuellement des phases de connexion et de déconnexion différentes pour les sources. En effet l'unicité au niveau de l'organe de commande en puissance ne limite pratiquement pas la dissociation des opérations de connexion et déconnexion au niveau des sources, c'est-à-dire des relais de commande, comme cela était le cas avec les dispositifs classiques.

Egalement dans le cas d'appareil comportant une unité de cuisson thermostatique réglable en température au gré de l'utilisateur par l'intermédiaire d'un organe de commande en température symbolisé ici par Cq et sous le contrôle d'un capteur de température CT, on mémorise en mémoire morte des données prédéterminées définissant la plage limite de variation de température pour le pas de réglage choisi, cette plage variant éventuellement en fonction de ce pas.

Selon une variante de réalisation, l'unité de gestion permet une indication à l'utilisateur des choix éventuellement inadéquats par l'intermédiaire de la signalisation évoquée plus haut et intervient en modifiant le réglage en puissance pour les choix exploitables, cette intervention conduisant par exemple à une modulation du rapport cyclique en fonction de la température atteinte par rapport aux limites de plage.

La mémoire vive VM classiquement utilisée par le microprocesseur MP pour la mise en œuvre des différents processus de chauffage permet également de mémoriser les données variables introduites par les utilisateurs dans le cadre des programmes de chauffage, telle l'heure de démarrage du programme, sa durée et ses éléments caractéristiques modulables, telle la température ou autre.

## Revendications

1. Système de commande des sources électriques de chaleur d'un appareil de cuisson à four et/ou plaques chauffantes suivant différentes options prédéterminées dont la sélection est laissée au choix des utilisateurs, comportant :
— un ensemble (ALI) d'organes d'alimentation aptes à relier, chaque source électrique aux bornes d'alimentation en courant alternatif de l'appareil,
— une pluralité d'organes manuels de commande (C) accessibles aux utilisateurs et aptes à fournir sélectivement diverses combinaisons de signaux sous forme numérique en correspondance avec les différentes options prédéterminées,
— une unité de gestion (UG) des différentes sources et organisée autour d'un microprocesseur (MP) travaillant en temps réel sous le contrôle d'une horloge (H) et en association, par l'intermédiaire d'une liaison bus (LB), avec un ensemble de registres et de mémoires comprenant notamment au moins une unité de registres d'entrées de données numériques (IR) relié aux sorties de signaux des organes manuels de commande (C) et d'éventuels capteurs de mesure (CT) associés aux sources électriques, au moins une unité de registres de sortie (OR) contrôlant sélectivement l'actionnement des organes d'alimentation par l'intermédiaire d'interfaces individuelles reliées à ses sorties de données numériques, ainsi qu'une mémoire morte (MM) de programmes de chauffage liés aux diverses possibilités et une mémoire vive (MV) accessible en écriture aux utilisateurs, via au moins un organe manuel de commande (C), pour l'introduction d'informations variables dans le cadre des programmes de chauffage, caractérisé en ce que la mémoire morte (MM) comporte des données prédéterminées de temps maximal de fonctionnement de chaque source fonction de la source et du pas de réglage choisi, les données de temps maximal contenues en mémoire morte (MM) étant telles que le temps maximal se réduit en relation inverse de la puissance affichée, et en ce que la mémoire morte (MM) comporte des données prédéterminées de durée de préchauffage et de rapport cyclique de chauffage pour les différents pas de réglage des sources électriques de chaleur réglables en puissance, lesdites données relatives à un pas pour une source étant adressées par une combinaison binaire affichée par l'utilisateur au moyen de l'organe de commande (C) en puissance autorisant ce pas pour la source considérée.

2. Système de commande selon la revendication 1, caractérisé en ce que l'ensemble (ALI) d'organes d'alimentation est constitué par une pluralité de relais (RE).

3. Système de commande selon la revendication 1, caractérisé en ce que les organes manuels de commande (C) sont du type à logique câblée faisant correspondre une combinaison binaire différente de signaux à chaque manœuvre unitaire.

4. Système de commande selon la revendication 3, caractérisé en ce que chaque organe manuel de commande (C) est constitué par un commutateur rotatif multiposition à courant faible, dans lequel les différentes positions correspondent chacune à une combinaison binaire différente d'un même nombre d'éléments binaires.

5. Système de commande selon la revendication 2, caractérisé en ce que chaque interface individuelle de contrôle d'alimentation d'enroulement (RE) comporte un élément de commutation amplificateur (A) en série avec l'enroulement et au moins une bascule de mémorisation (B) du registre de sortie (OR) de gestion dont une sortie est reliée à une entrée de commande de l'élément de commutation.

6. Système de commande selon la revendication 1 pour appareil comportant au moins une unité de cuisson associant au moins deux sources électriques de chaleur pour le chauffage de ladite unité caractérisé en ce que la mémoire morte (MM) comporte aussi des données prédéterminées de couplage desdites sources en fonction du pas de réglage choisi pour l'élément de cuisson.

7. Système de commande selon la revendication 1 ou 6, pour appareil comportant une unité de cuisson thermostatique réglable en température au gré de l'utilisateur par l'intermédiaire d'un organe manuel de commande (Cq) et sous le contrôle d'au moins un capteur de température (CT) de la zone thermostatée, caractérisé en ce que la mémoire morte (MM) comporte de plus des données prédéterminées définissant au moins une plage limite de variation de température et en ce qu'un convertisseur analogique-numérique situé en sortie de capteur convertit sous forme binaire les signaux de sortie dudit capteur en vue de leur comparaison par l'unité de gestion avec la combinaison binaire caractéristique du choix de température fait par l'utilisateur par l'intermédiaire de l'organe manuel de commande de température de manière à moduler l'alimentation de la ou des sources électriques de ladite unité de cuisson établie selon le cycle fixé par le pas de réglage de l'organe de commande en puissance et ce en fonction du dépassement par valeur inférieure ou supérieure de la température par rapport à la plage limite prédéterminée.

**Claims**

1. A system for the control of electrical heating supplies for a cooker appliance having an oven and/or hot plates in accordance with different predetermined options with a selection thereof under the control of the user, comprising :
— an assembly (ALI) of feed means adapted to each electrical supply with the feed terminals of the AC supply of the appliance,
— a plurality of manual control means (C) arranged to be accessible to users and adapted to selectively furnish various combinations of signals in a digital form corresponding to the different predetermined options,
— a managing unit (UG) for the different supplies organized around a microprocessor (MP) operating on a real time basis under the control of a clock (H) and associated, through the intermediary of a bus connection (LB), with an assembly of registers and memories comprising more especially at least one input digital data register unit (IR) connected with the signal outputs of the manual control means (C) and possibly measuring sensors (CT) associated with the electrical supplies, at least one output register unit (OR) selectively controlling the action of the feed means through the intermediary of individual interfaces connected with the digital data outputs, and also a ROM (MM) containing heating programs involved with different possibilities and a RAM (MV) accessible for entries made by the users, via at least one manual control means (C) for the introduction of variable information within the outline of the heating programs, characterized in that the ROM (MM) comprises predetermined maximum time data for the function of each supply function of the supply and of the selected regulating step, the maximum time data contained in the ROM (MM) being such that the maximum time decreases with an inverse relationship to the input power, and in the ROM (MM) comprises predetermined data for the duration of preheating and for the cyclical pattern of heating for different regulating steps of the adjustable power electrical heating supplies, said data relating to one step for a supply being addressed by a binary combination indicated by the user using the power control means (C) enabling this step for the supply in question.

2. The control system as claimed in claim 1 characterized in the feed means assembly (ALI) is constituted by a plurality of relays (RE).

3. The control system as claimed in claim 1 characterized in that the manual control means (C) are of the permanently wired logic type causing a different binary signal combination to correspond to each unitary maneuver.

4. The control system as claimed in claim 3 characterized in that each manual control means (C) is constituted by a rotary low current multiposition switch, in which the different positions correspond to a different binary combination of an identical number of binary elements.

5. The control system as claimed in claim 2 characterized in that each individual winding control (RE) comprises an amplifier switch element (A) in series with the winding and at least one flip-flop memory (B) of the output management register (OR) of which one output is connected with a control input of the switch element.

6. The control system as claimed in claim 1 for an appliance comprising at least one cooking unit associating at least two electrical heating supplies for the heating of the said unit, characterized in that the ROM (MM) also comprises predetermined coupling data for the said supplies as a function of the regulating step selected for the cooking element.

7. The control system as claimed in claim 1 or claim 6 for an appliance comprising a regulatable thermostatic cooking unit able to be set by the user by the intermediary of a manual control means (Cq) and under the control of at least one temperature sensor (CT) for the zone under thermostatic control, characterized in that the ROM (MM) comprises furthermore predetermined data defining at least one limit range for the variation of the temperature and in that an analog-digital converter placed at the output of the said sensor converts the output signals of the said sensor into a binary form for comparing the same in the manager unit with the binary combination characteristic of the temperature selection made by the user through the intermediary of the manual control means of temperature in such a manner as to modify the feed to the electrical supply or supplies of the said cooking unit established in accordance with the cycle set up by the regulating step of the power control means, this being in dependence on exceeding lower or upper value of the temperature in relation to the limited predetermined range.

**Patentansprüche**

1. System zur Steuerung der elektrischen Wärmequellen eines Garungsgeräts des Typs Ofen und/oder Heizplatten nach verschiedenen vorbestimmten Optionen, deren Auswahl den Benützern überlassen wird, mit : einer Gruppe (ALI) von Versorgungselementen, die geeignet sind, jede elektrische Quelle mit den Klemmen für die Versorgung des Geräts mit Wechselstrom zu verbinden ;

— einer Mehrzahl von manuellen Steuerelementen (C), die den Benützern zugänglich und dazu geeignet sind, verschiedene Signalkombinationen in digitaler Form entsprechend den verschiedenen vorbestimmten Optionen selektiv abzugeben ;

— einer Leiteinheit (UG) für die verschiedenen Quellen, um einen Mikroprozessor (MP) herum organisiert, der unter Kontrolle eines Taktgebers (H) in Realzeit arbeitet und über eine Busleitung (LB) einer Gruppe von Registern und Speichern zugeordnet ist, welche insbesondere wenigstens eine Einheit von Registern zum Eingeben von digitalen Daten (IR) umfaßt, die mit den Signalausgängen der manuellen Steuerelemente (C), sowie den Ausgängen eventueller, den elektrischen Quellen zugeordneter Meßwertaufnehmer (CT) verbunden ist, wenigstens eine Einheit von Ausgangregistern (OR) enthält, welche die Betätigung der Versorgungselemente selektiv steuern über individuelle, mit ihren Digitaldatenausgängen verbundene Schnittstellen, und einen Festwertspeicher (MM) für die den verschiedenen Möglichkeiten entsprechenden Heizprogramme sowie einen Arbeitsspeicher (MV) umfaßt, welcher über wenigstens ein manuelles Steuerelement (C) für die Eingabe veränderlicher Informationen im Rahmen der Heizungsprogramme den Benützern zum Einschreiben zugänglich ist, dadurch gekennzeichnet, daß der Festwertspeicher (MM) vorbestimmte Daten umfaßt über die maximale Arbeitszeit jeder Quelle in Abhängigkeit der Quelle und des gewählten Einstellungsschrittes, wobei die in dem Festwertspeicher (MM) enthaltenen Maximalzeitdaten derart sind, daß die Maximalzeit sich im umgekehrten Verhältnis zu der angezeigten Leistung vermindert, und daß der Festwertspeicher (MM) vorbestimmte Daten über die Vorheizungsdauer und über das zyklische Verhältnis der Heizung für die verschiedenen Einstellungsschritte der elektrischen, in der Leistung einstellbaren Wärmequellen umfaßt, wobei die obengenannten Daten, die einen Schritt für eine Quelle betreffen, durch eine Binärkombination adressiert werden, die der Benützer mittels des Leistungssteuerelements (C) anzeigt und diesen Schritt für die betreffende Quelle freigibt.

2. System zur Steuerung nach Anspruch 1, dadurch gekennzeichnet, daß die Gruppe (ALI) der Versorgungselemente aus einer Mehrzahl von Relais (RE) besteht.

3. System zur Steuerung nach Anspruch 1, dadurch gekennzeichnet, daß die manuellen Steuerelemente (C) vom Typ mit verdrahteter Logik sind, die jeder Bedienungseinheit eine verschiedene Binärsignalkombination entsprechen läßt.

4. System zur Steuerung nach Anspruch 3, dadurch gekennzeichnet, daß jedes manuelle Steuerelement (C) aus einem Mehrstellungs-Drehschalter für Schwachstrom besteht, in welchem jede der verschiedenen Stellungen einer verschiedenen Binärkombination einer selben Zahl von Binärelementen entspricht.

5. System zur Steuerung nach Anspruch 2, dadurch gekennzeichnet, daß jede individuelle Schnittstelle zur Steuerung der Versorgung der Wicklung (RE) ein mit der Wicklung in Serie liegendes verstärkendes Schaltelement (A) und wenigstens eine Flip-Flop-Schaltung zur Speicherung des Leit-Ausgangsregisters (OR) umfaßt, wovon einer der Ausgänge mit dem Eingang zur Steuerung des Schaltelementes verbunden ist.

6. System zur Steuerung nach Anspruch 1 für ein Gerät mit wenigstens einer Garungseinheit, welche wenigstens zwei elektrische Wärmequellen für die Erhitzung der obengenannten Einheit verbindet, dadurch gekennzeichnet, daß der Festwertspeicher (MM) auch vorbestimmte Daten für die Ankopplung der obengenannten Quellen in Abhängigkeit von dem gewählten Einstellungsschritt für das Garungselement umfaßt.

7. System zur Steuerung nach den Ansprüchen 1 oder 6 für ein Gerät mit einer thermostatischen Garungseinheit, deren Temperatur nach Belieben des Benützers mittels eines manuellen Steuerelementes (Cq) einstellbar ist und unter Kontrolle von wenigstens einem Temperaturaufnehmer (CT) der thermostatisch geregelten Zone steht, dadurch gekennzeichnet, daß der Festwertspeicher (MM) ferner vorbestimmte Daten umfaßt, die wenigstens einen Grenzbereich der Temperaturänderungen definieren, und daß ein sich am Aufnehmerausgang befindender Analog-Digital-Wandler die Ausgangssignale des obengenannten Aufnehmers in Binärform umwandelt, damit sie von der Leiteinheit mit der Binärkombination verglichen werden, die für die Auswahl der Temperatur durch den Benutzer über das manuelle Element zur Steuerung der Temperatur charakteristisch ist, so daß die Versorgung der elektrischen Quelle oder der elektrischen Quellen der obengenannten Garungseinheit moduliert wird, welche gemäß dem von dem Einstellungsschritt des Steuerelements für die Leistung bestimmten Zyklus festgelegt wird, und zwar in Abhängigkeit von der Überschreitung der Temperatur im unteren oder oberen Wert im Vergleich zu dem vorbestimmten Grenzbereich.·

0 119 580